# EUROPEAN PATENT APPLICATION

(11) **EP 2 821 219 A1**
(43) Date of publication of application: **07.01.2015**
(21) Application number: 13175409.5
(22) Date of filing: 05.07.2013
(51) Int. Cl.: B31D 3/02, B29D 99/00

(54) **Method of producing a composite honeycomb**

(71) Applicant: EIG Equipement Industriel SA, 1305 Penthalaz (CH)
(72) Inventor: Mordasini, François, 1009 Pully (CH); Gautier, Gérard, 1169 Yens (CH)
(74) Representative: Ganguillet, Cyril

(57) **Abstract**

The invention relates to a method of producing a composite honeycomb (1) formed of a plurality of honeycomb cells (2) each of substantially hexagonal cross-section and with each wall of said honeycomb cells (2) of substantially the same thickness, comprising the following steps:
a) producing at least four corrugated sheets (3,4,5,6,20,21), namely a first (3), a second (4), a third (5) and a fourth (6) corrugated sheet, by interconnecting a plurality of substantially U-shaped elements (9) with substantially inverted U-shaped elements (9'),
wherein said U-shaped elements (9), respectively said inverted U-shaped elements (9'), comprise each fiber-reinforced material comprising a plurality of structural fibers (40),
wherein said U-shaped elements (9) and said inverted U-shaped elements (9') comprise each a horizontal side (7) and two inclined sides (8),
and wherein each inclined side (8) of each U-shaped element (9) is brought into contact and bonded with one inclined side (8) of one of said inverted U-shaped elements (9'),

b) stacking said first (3), second (4), third (5) and fourth (6) corrugated sheets upon each other so as to form a corrugated sheets stack (30) and so as to obtain a plurality of substantially hexagonal honeycomb cells (2) by bringing into contact horizontal sides (7) of adjacent corrugated sheets (3,4,5,6),
c) stacking subsequent corrugated sheets (20,21) upon said corrugated sheets stack (30) according to the step b) until obtaining a desired width (w) of the composite honeycomb (1),
d) and bonding horizontal sides (7) of corrugated sheets (3,4,5,6,20,21) brought into contact either concomitantly as a whole or sequentially in pairs as one of said corrugated sheets (3,4,5,6,20,21) is stacked upon an other one.

## Description

### Field of the invention

The present invention relates to a method of producing a composite honeycomb. In particular, said method, object of the invention, allows to produce a composite honeycomb formed of a plurality of honeycomb cells each of substantially hexagonal cross-section and wherein each wall of said honeycomb cells are substantially of the same thickness.

### Background of the invention

Sandwich-structures comprising skins and a honeycomb core are well known and widely used in many applications where high stiffness and lightweight material are required. In particular, the combined features of stiffness and lightweight make the sandwich-structures comprising skins and a honeycomb core particularly well-suited for applications such as motor racing vehicles, boats, helicopter, train, aircrafts and spacecrafts.

Traditionally, honeycombs are made from aluminum because of its low-weight properties. Nevertheless, the use of aluminum also results in problems: Firstly, the use of aluminum leads to an easily damaged and easily crumpled structure when subjected to handling and manufacturing. Secondly, a sandwich-structure comprising a honeycomb core made of aluminum is subjected to warping. Indeed, the skins of a sandwich-structure are traditionally made of composite material, in particular made of carbon fiber-reinforced material, thus resulting in a different coefficient of expansion between the honeycomb core and the skins of the sandwich-structure. Such risk of warping cannot be tolerated in applications enduring significant temperature differences such as motor racing vehicles, boats, helicopter, train, aircrafts and spacecrafts. Thirdly, aluminum is subject to galvanic corrosion. Therefore, a sandwich-structure comprising a honeycomb core made of aluminum is not reliable over time.

For avoiding the above-mentioned aluminum drawbacks and to take benefit from composite materials mechanical properties, composite materials, in particular carbon fiber-reinforced material, are known to be used for manufacturing composite honeycombs. The traditional method of producing a composite honeycomb formed of a plurality of hexagonal cells is commonly referred to as a corrugation process (see US patent number 5,030,305). Said traditional method is based on the assembly of corrugated composite sheets, said sheets being corrugated in such a manner that they define the outline of half of adjacent hexagonal honeycomb cells. Traditionally, said corrugated composite sheets are obtained by passing composite sheets through mated corrugating rollers. Alternatively, corrugated composite sheets can be obtained by pressing composite sheets in a press comprising a pair of mating dies. Nevertheless, said corrugating rollers and said press do not permit to obtain precisely said outline of half of adjacent hexagonal honeycomb cells due to the friction between the composite sheet and the rollers or between the composite sheet and the dies. Moreover, because of said friction and because of the low elasticity properties of composite material, composite sheets are likely to be torn when passing through mated corrugating rollers or when being pressed between mating dies. Once corrugated, the sheets are stacked, aligned and bonded to form a composite honeycomb. Nevertheless, by the use of the above-mentioned traditional method, two walls of each hexagonal cell are made of parts of two corrugated sheets brought into contact while the other four walls are made of a part of a single corrugated sheet. Therefore, said two walls are of double-thickness while said other four walls are of single-thickness. At this stage, one should point out that the terms "double-thickness" and "single-thickness" are relative terms, not absolute, since single corrugated sheet can comprise a single or a plurality of plies made of fiber-reinforced material. For example and in the case that a honeycomb would be produced by stacking corrugated sheets comprising each two plies, said "double-thickness" term refers to walls of double-thickness comprising each parts of two corrugated sheets and therefore four plies while said "single-thickness" term refers to walls of single-thickness comprising each a part of one corrugated sheet and therefore two plies. Such non-uniformity in walls thickness makes the honeycomb anisotropic, in particular in mechanical properties such as deformability properties and expansion properties. Said mechanical properties are therefore different in different directions. Such anisotropy cannot be tolerated in applications where mechanical properties have to be uniform or quasi-uniform in all directions in the plane of the honeycomb, meaning in the plane perpendicular to the thickness direction of the honeycomb. Moreover, such anisotropy can lead to the warping of the composite honeycomb when said composite honeycomb is subjected to temperature differences since the thermal expansion behavior of each honeycomb cell wall is not uniform. Furthermore, said walls of double-thickness lead to over-weight, each hexagonal cell being 33% heavier than what it would be if all hexagonal cell walls are of single-thickness. Repeating the fact that sandwich-structures comprising skins and a honeycomb core are widely used in applications where high stiffness and lightweight material are required, such over-weight can be of significant drawbacks, in particular in applications such as motor racing vehicles, boats, helicopter, train, aircrafts and spacecrafts.

Besides the above-mentioned traditional method of producing a composite honeycomb, others methods have been developed for producing a quasi-isotropic composite honeycomb. Such methods (see publication number DE4106265) are based on stacking prismatic shape bodies of hexagonal cross-section wrapped in composite sheet and thus forming a honeycomb structure. The sheets of adjacent bodies are bonded together and the bodies are then separated from the plies. In a particular method (see publication number EP0761421A2), the sheets are placed on three sides of said prismatic shape bodies, the width of said sheets being equal to the width of the sides. The bodies are then stacked on each other so that between parallel surfaces of adjacent body only one sheet is positioned. The ends of adjacent sheets are then connected together. Although such methods lead to quasi-isotropic composite honeycomb, they cannot be operated in a continuous and high-speed manner. Carrying out such method is therefore costly, time consuming and laborious. Moreover and since ends of adjacent sheets are bonded together, the reliability of such produced honeycomb is lower than in the case that sides of adjacent sheets are bonded together. Indeed, since the stress and strain are transmitted from one honeycomb cell to the other through a particular point, not through a surface, the adjacent sheets are likely to be disconnected. In fact, the produced quasi-isotropic honeycomb dos not comprise any continuity of fiber-reinforced material between walls of each honeycomb cell, meaning a continuity of fiber-reinforced material at each corner of each honeycomb cell.

Therefore, there is a need for a method fulfilling, respectively avoiding, the above-mentioned requirements and drawbacks. The aim of the present invention is thus to provide a solution to these problems.

### Summary of the invention

To this end, the present invention proposes a method according to claim 1. Other important features of the method are defined in claims 2 to 23.

The present invention thus provides a method of producing a composite honeycomb formed of a plurality of honeycomb cells each of substantially hexagonal cross-section and with each wall of said honeycomb cells of substantially the same thickness. Advantageously, the cross-section of each honeycomb cell can be in the form of a regular hexagon.

The method, object of the invention, allows to produce a composite honeycomb comprising fiber-reinforced material comprising a plurality of structural fibers. When such a composite honeycomb is used as a honeycomb core in a sandwich-structure, the risk of warping is avoided since the composite skins and said composite honeycomb have substantially the same coefficient of expansion. Moreover, the composite honeycomb is not subject to galvanic corrosion.

Moreover, the method, object of the invention, allows to produce a composite honeycomb formed of a plurality of honeycomb cells each of substantially hexagonal cross-section and with each wall of said honeycomb cells of substantially the same thickness. By considering that material properties of each cell wall is uniform and by neglecting the non-uniformity in mechanical properties due to the particular geometry of each cell, the uniformity in walls thickness makes the composite honeycomb isotropic, meaning mechanical properties uniform in all directions in the plane of the honeycomb, meaning in the plane perpendicular to the thickness direction of the honeycomb. Moreover and in the case that the produced honeycomb would be subjected to temperature differences, said uniformity in walls thickness makes the thermal expansion behavior of each honeycomb cell walls uniform so that warping of the honeycomb is avoided.

Furthermore, the cell walls of the produced composite honeycomb comprise each a portion of U-shaped element and a portion of an inverted U-shaped element. Each cell wall of the produced composite honeycomb is therefore at least of double thickness. Nevertheless, the produced composite honeycomb is 33% lighter than a honeycomb produced with the help of the above mentioned traditional method. Indeed, in order to produce with the help of the traditional method a composite honeycomb wherein the cell walls comprise each at least two plies, corrugated sheets comprising each two plies would be stacked upon each other. Such traditional method therefore directly implies that two walls of each hexagonal cell are made of parts of two corrugated sheets brought into contact while the other four walls are made of a part of one corrugated sheet. Therefore, said two walls are of double-thickness and comprise four plies while said other four walls are of single-thickness and comprise two plies. A lightweight honeycomb, produced according to the method object of the invention, can be of significant advantages in applications such as motor racing vehicles, boats, helicopter, train, aircrafts and spacecrafts.

The U-shaped elements and the inverted U-shaped elements comprise each fiber-reinforced material comprising a plurality of structural fibers. Advantageously, the structural fibers of the U-shaped elements, respectively of the inverted U-shaped elements, may be comprised in at least one fiber-reinforced U-shaped ply, respectively in at least one fiber-reinforced inverted U-shaped ply. The structural fibers are intended to bear stress and strain applied to the composite honeycomb. Advantageously, the structural fibers are arranged to provide a continuity of fiber-reinforced material between the horizontal side and the two inclined sides of the U-shaped plies, respectively of the inverted U-shaped plies so that stress and strain applied to the composite honeycomb can be transmitted from said horizontal side to said inclined sides. Advantageously, said structural fibers can be arranged to lie essentially in a unidirectional orientation for bearing stress and strain in said orientation. Advantageously, said structural fibers can be arranged so that the orientation of the structural fibers of the U-shaped plies differs from the orientation of the structural fibers of the inverted U-shaped plies so that stress and strain applied to the composite honeycomb in different orientations can be borne. Moreover, the structural fibers can be chosen so that the thickness of the U-shaped plies and of the inverted U-shaped plies are comprised between 15 and 100 µm. Advantageously, the diameter of the structural fibers are comprised between 5 and 11 µm. More advantageously, the relative weight of each U-shaped ply and each inverted U-shaped ply may be as low as 15 g/m². As mentioned above, a lightweight composite honeycomb can be of significant advantages.

Advantageously, the U-shaped elements, respectively the inverted U-shaped elements, may comprise each at least two fiber-reinforced U-shaped plies, respectively at least two fiber-reinforced inverted U-shaped plies, namely a first ply and a second ply, comprising the structural fibers. In such a case, the structural fibers may be arranged so that the orientation of the structural fibers of the first ply differs from the orientation of the structural fibers of the second ply.

Furthermore, for producing a corrugated sheet, the inclined sides of U-shaped elements are brought into contact and bonded with inclined sides of inverted U-shaped elements. The bonding between said elements is reliable. Said elements are not likely to be disconnected since the stress and strain applied to a corrugated sheet are transmitted from one element to the other through sides of element, not through an end. Similarly, for obtaining a composite honeycomb, the horizontal sides of adjacent corrugated sheet are brought into contact and bonded together. The bonding between said corrugated sheets is reliable. Said corrugated sheets are not likely to be disconnected since the stress and strain applied to the honeycomb are transmitted from one cell to the other through sides of adjacent corrugated sheet, not through an end.

Moreover, the method, object of the invention, can be operated in a continuous and high-speed manner. Producing a composite honeycomb is therefore less costly, less time consuming and less laborious than known method.

Further objects, features and advantages of the invention will become apparent to a person skilled in the art upon reading the specification and appended figures.

### Brief description of the drawings

The invention will be better understood with the aid of the description of embodiments given by way of example and illustrated by the figures, in which:
- Figure 1A depicts a schematic representation in cross-section of a known traditional method of producing a composite honeycomb;
- Figure 1B is a detailed view according to A of the composite honeycomb of Figure 1A;
- Figure 2A depicts a schematic representation in cross-section of a method of producing a composite honeycomb, in accordance with the invention in a first embodiment;
- Figure 2B is a detailed view according to B of the composite honeycomb of Figure 2A;
- Figure 3A depicts a schematic representation in cross-section of a method of producing a composite honeycomb, in accordance with the invention in a second embodiment;
- Figure 3B is a detailed view according to C of the composite honeycomb of Figure 3A;
- Figure 4 depicts a schematic representation in cross-section of a method of producing corrugated sheets, in accordance with the invention;
- Figure 5 depicts a schematic representation in cross-section of a method of forming U-shaped elements and inverted U-shaped elements, in accordance with the invention;
- Figure 6 depicts a schematic representation in perspective of a fiber-reinforced prepreg ply;
- Figure 7 depicts a schematic representation in perspective of a fiber-reinforced U-shaped ply;
- Figure 8 depicts a schematic representation in cross-section of a composite honeycomb produced with the help of the method object of the invention.

### Detailed description of the invention

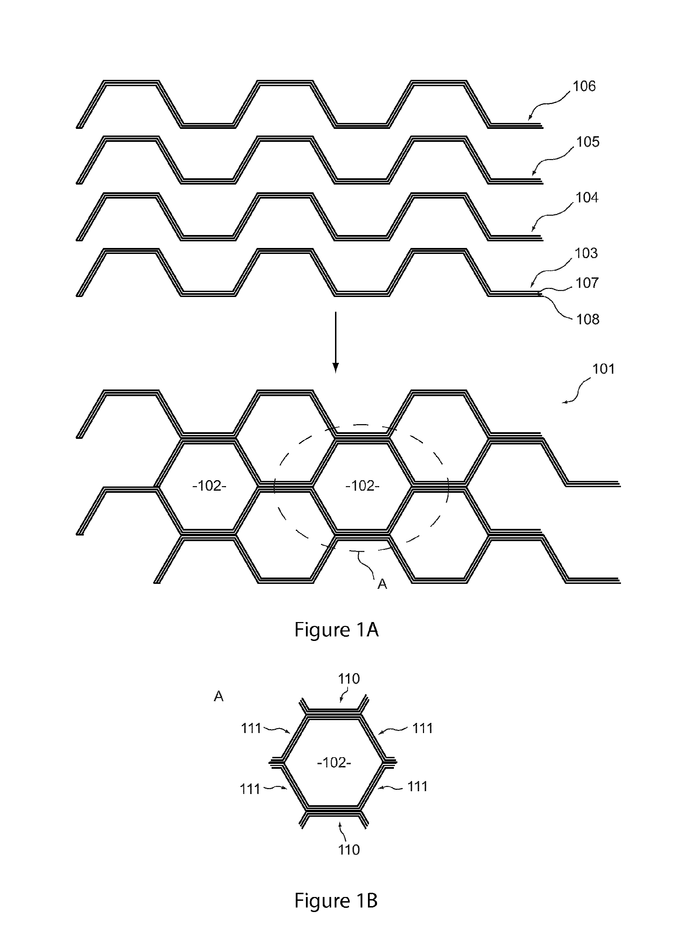

The present invention will now be described more fully hereinafter with reference to the appended Figures 1 to 8.

Figure 1A depicts a schematic representation of a known traditional method of producing a composite honeycomb 101 formed of a plurality of hexagonal cells 102. Said traditional method is commonly referred to as a corrugation process and is based on the assembly of corrugated composite sheets 103,104,105,106, said sheets being corrugated in such a manner that they define the outline of half of adjacent hexagonal honeycomb cells 102. In Figure 1 the corrugated composite sheets 103,104,105,106 and the honeycomb 101 are shown in cross-section. The corrugated composite sheets 103,104,105,106 are traditionally obtained by passing composite sheets through mated corrugating rollers. Alternatively, corrugated composite sheets can be obtained by pressing composite sheets in a press comprising a pair of mating dies. Nevertheless, said corrugating rollers and said press does not permit to obtain precisely said outline of half of adjacent hexagonal honeycomb cells due to the friction between the composite sheet and the rollers or between the composite sheet and the dies. Moreover, because of said friction and because of the low elasticity properties of composite material, composite sheets are likely to be torn when passing through mated corrugating rollers or when being pressed between mating dies. Once corrugated, the composite sheets are stacked upon each other, aligned and bonded to form a composite honeycomb 101. Traditionally, the corrugated sheets 103,104,105,106 comprise each a plurality of plies. In Figure 1A, each corrugated sheet 103,104,105,106 comprises two plies 107,108. In Figures 1A and 1B, the honeycomb 101 produced by the above-mentioned traditional method is anisotropic since the walls of each honeycomb cell 102 are not of the same thickness. Indeed, two walls 110 of each hexagonal cell 102 are made of parts of two corrugated sheets brought into contact and therefore made of four plies while the other four walls 111 are made of a part of a single corrugated sheet and therefore made of two plies. Said two walls 110 are therefore of double-thickness while said other four walls 111 are of single-thickness. Such non-uniformity in walls thickness makes the honeycomb anisotropic, in particular in mechanical properties such as deformability properties and expansion properties, as well as over-weighted, the honeycomb being 33% heavier than what it would be if all hexagonal cell walls are of single-thickness.

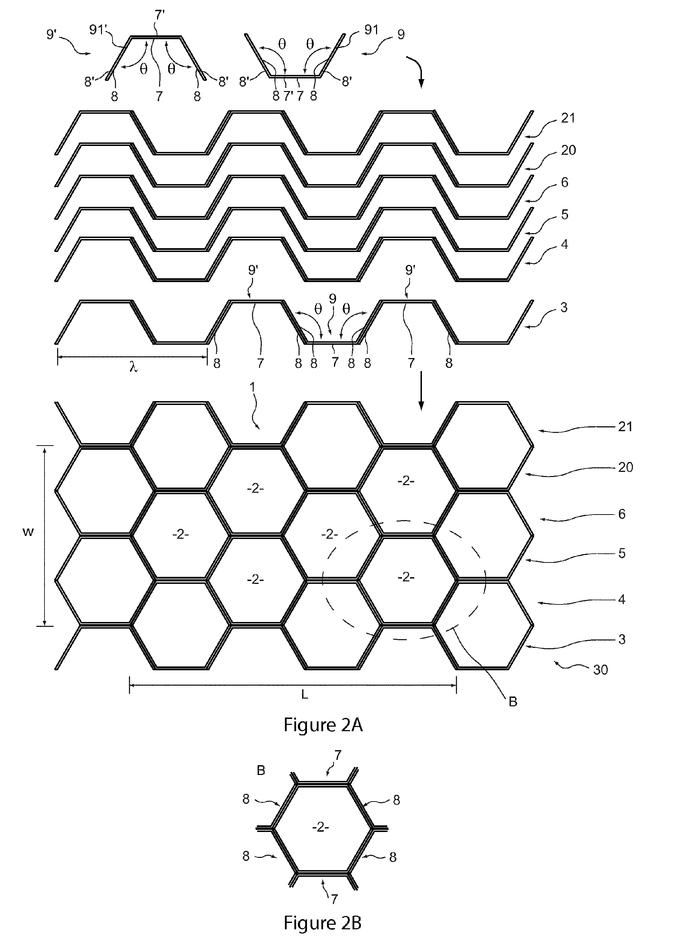

Figure 2A depicts a schematic representation of a method of producing a composite honeycomb 1, in accordance with the invention in a first embodiment. The produced composite honeycomb 1 is formed of a plurality of honeycomb cells 2 each of substantially hexagonal cross-section. Moreover, each wall of said honeycomb cells are of substantially the same thickness, see Figure 2B. Advantageously, the composite honeycomb 1 is formed of a plurality of honeycomb cells 2 each of substantially regular hexagonal cross-section.

The first step of the method, object of the invention, consists essentially of producing at least four corrugated sheets 3,4,5,6 by interconnecting a plurality of fiber-reinforced substantially U-shaped elements 9 with fiber-reinforced substantially inverted U-shaped elements 9'. In Figure 2A, six corrugated sheets are produced, namely a first 3, a second 4, a third 5 and a fourth 6 corrugated sheet as well as two subsequent corrugated sheets 20,21. The U-shaped elements 9, the inverted U-shaped elements 9', the corrugated composite sheets 3,4,5,6,20,21 and the honeycomb 1 are shown in Figure 2A in cross-section. The U-shaped elements 9 comprise each a horizontal side 7 and two inclined sides 8. Advantageously, the inverted U-shaped elements 9' can be substantially symmetrical in shape to the U-shaped elements 9, the horizontal side 7 and the inclined sides 8 can be substantially of same dimensions and the inclined sides 8 can be inclined at substantially 120° relative to the horizontal side 7 so that the produced composite honeycomb 1 is formed of a plurality of cells 2 each of substantially regular hexagonal cross-section. The plurality of U-shaped elements 9 are interconnected with inverted U-shaped elements 9' so that each inclined side 8 of each U-shaped element 9 is brought into contact and bonded with one inclined side 8 of one of the inverted U-shaped elements 9'. By this way, the U-shaped elements 9 and the inverted U-shaped elements 9' are bonded together so that each corrugated sheet 3,4,5,6,20,21 is shaped in cross-section in a substantially periodic trapezoidal waveform defining in cross-section the outline of half of adjacent hexagonal honeycomb cells 2 of the composite honeycomb 1. Advantageously, each corrugated sheet 3,4,5,6,20,21 can be shaped in cross-section in a substantially periodic regular trapezoidal waveform defining in cross-section the outline of half of adjacent regular hexagonal honeycomb cells 2 of the composite honeycomb 1 when the horizontal side 7 and the inclined sides 8 of the U-shaped elements 9 are substantially of same dimensions, when the inclined sides 8 are inclined at substantially 120° relative to the horizontal side 7 and when the inverted U-shaped elements 9' are substantially symmetrical in shape to the U-shaped elements 9. Advantageously and since the inclined side 8 of U-shaped elements 9 are brought into contact and bonded with inclined sides 8 of inverted U-shaped elements 9', the bonding between the U-shaped elements and the inverted U-shaped elements is reliable. The elements are not likely to be disconnected since the stress and strain applied to the composite honeycomb 1 and therefore to the corrugated sheets 3,4,5,6,20,21 are transmitted from one element to the other through sides 8 of elements 9,9', not through an end. The number of interconnected U-shaped elements 9 and inverted U-shaped elements 9' depends on the desired length L of the composite honeycomb 1. Moreover and since the inclined side 8 of U-shaped elements 9 are brought into contact and bonded with inclined sides 8 of inverted U-shaped elements 9', each corrugated sheet 3,4,5,6,20,21 comprises inclined sides 8 of double thickness and horizontal side 7 of single thickness. Since horizontal sides 7 of corrugated sheets 3,4,5,6,20,21 are intended to be brought into contact so as to form a corrugated sheets stack 30 (see below), the cell walls of the corrugated sheets stack 30 are all of the same thickness, each being of double thickness.

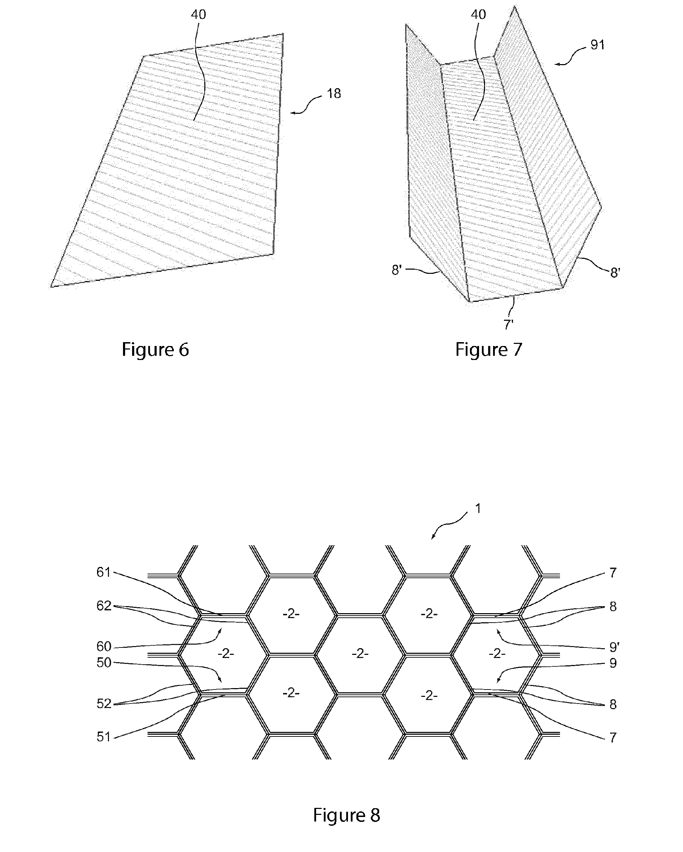

The U-shaped elements 9 and the inverted U-shaped elements 9' comprise each fiber-reinforced material comprising a plurality of structural fibers 40, said structural fibers 40 being intended to bear stress and strain applied to the composite honeycomb. Advantageously, the U-shaped elements 9, respectively the inverted U-shaped elements 9', may comprise at least one fiber-reinforced U-shaped ply 91, respectively at least one fiber-reinforced inverted U-shaped ply 91', which comprises the structural fibers 40 of the U-shaped elements 9, respectively of the inverted U-shaped elements 9'. For example, Figure 7 depicts a schematic representation in perspective of a fiber-reinforced U-shaped ply 91. The U-shaped plies 91 and the inverted U-shaped ply 91' comprise each a horizontal side 7' and two inclined sides 8'. Advantageously, the plurality of structural fibers 40 may be arranged to provide a continuity of fiber-reinforced material between the horizontal side 7' and the two inclined sides 8' of the U-shaped ply 91, respectively of the inverted U-shaped ply 91', so that stress and strain applied to the composite honeycomb can be transmitted from the horizontal side 7' to the inclined sides 8'. Moreover, the structural fibers 40 may advantageously be arranged to lie essentially in a unidirectional orientation for bearing stress and strain in said orientation. For example, in Figure 7, the U-shaped ply 91 comprises structural fibers 40 arranged to lie essentially in a unidirectional orientation of about 45° relative to the thickness direction of the composite honeycomb 1. In Figure 7, the continuity of structural fibers 40 between the horizontal side 7' and the two inclined sides 8' of the U-shaped ply 91 is clearly evidenced. Stress and strain can therefore be transmitted from the horizontal side 7' to the inclined sides 8'. Referring to Figure 7, one has to note that Figure 7 is a schematic representation of a U-shaped ply 91. In reality, a U-shaped ply 91 can comprise a number of structural fibers 40 much larger that the one evidenced in Figure 7. Advantageously, the structural fibers 40 may be arranged so that the orientation α of the structural fibers 40 of the U-shaped elements 9 differs from the orientation β of the structural fibers 40 of the inverted U-shaped elements 9' so that stress and strain applied to the composite honeycomb in different orientations can be borne. Moreover, the structural fibers 40 may be arranged so that the orientation α of the structural fibers 40 of the U-shaped elements 9 is essentially perpendicular to the orientation β of the structural fibers 40 of the inverted U-shaped elements 9'. Advantageously, the orientation α of the structural fibers 40 of the U-shaped elements 9 and/or the orientation β of the structural fibers 40 of the inverted U-shaped elements 9' is chosen among substantially 0°, ±30°, ±45° or 90° relative to the thickness direction of the composite honeycomb 1. For example, one can have the following combinations of structural fibers orientations [α, β]= [+30,-30°] or [+45,-45°] or [0°,+30°] or [0°, -30°] or [0°,+45°] or [0°,-45°] or [0°,90°] or [-30°,+45°] or [+30°,-45°]. Others combinations can be found for example by defining in the preceding examples the β values as the α ones and vice versa. Advantageously, the structural fibers 40 may be chosen among carbon, glass, aramid, ceramic, quartz, thermoplastic polyethylene (UHMWPE) and polybenzoxazole (PBO). Advantageously, the structural fibers 40 are chosen so that the thickness of each U-shaped ply 91 and of each inverted U-shaped ply 91' are comprised between 15 and 100 µm. Advantageously, the diameter of the structural fibers 40 are comprised between 5 and 11 µm. U-shaped plies 9 and inverted U-shaped plies 9 comprising structural fibers 40 of such thickness are considered and defined as thin plies. Moreover, the relative weight of each U-shaped ply 91 and of each inverted U-shaped ply 91' may be as low as 15 g/m². Lightweight plies directly leads to a lightweight composite honeycomb, which can be, as mentioned above, of significant advantages.

Advantageously, each U-shaped element 9 and each inverted U-shaped element 9' may comprise a plurality of fiber-reinforced plies. For example, said U-shaped elements 9, respectively said inverted U-shaped elements 9', can comprise each at least two fiber-reinforced U-shaped plies, respectively at least two fiber-reinforced inverted U-shaped plies, namely a first ply and a second ply. Advantageously, the two fiber-reinforced U-shaped plies, respectively the two fiber-reinforced inverted U-shaped plies, may be directly superimposed. The first plies and the second plies comprise the structural fibers 40 of the U-shaped elements 9 and of the inverted U-shaped elements 9'. Advantageously, the structural fibers 40 are arranged so that the orientation of the structural fibers 40 of the first ply differs from the orientation of the structural fibers 40 of the second ply. In particular, the orientation of the structural fibers 40 of the first ply can be substantially perpendicular to the orientation of the structural fibers 40 of the second ply. Moreover, the orientation of the structural fibers 40 of the first ply and/or the orientation of the structural fibers 40 of the second ply can be chosen among substantially 0°, ±30° ±45° or 90° relative to the thickness direction of the composite honeycomb 1. For example and by defining by γ the orientation of the structural fibers 40 of the first ply of the U-shaped elements 9, by δ the one of the second ply of the U-shaped elements 9, by ε the orientation of the one of the first ply of the inverted U-shaped elements 9' and by ζ the one of the second ply of the inverted U-shaped elements 9', one can have the following combination of structural fibers orientations: [γ,δ,ε,ζ]= [+45°,-45°,-45°,+45°] or [+45°,-45°,+45°,-45°] or [-45°,+45°,-45°,+45°] or [0°,+90°,-90°,0°] or [+90°,0°,0°,-90°] or [0°,+30°,-30°,0°] or [0°,-30°,+30°,0°] or [0°,+45°,-45°,0°] or [0°,+45°,-45°,0°] or [+45°,-30°,+30°,-45°] or [-45°,+30°,-30°,+45°] or [+45°,-90°,+90°,-45°] or [-45°,+90°,-90°,+45°] or [+30°,-90°,+90°,-30°] or [-30°,+90°,-90°,+30°].

Subsequently of producing the corrugated sheets 3,4,5,6,20,21, the method object of the invention comprises the step of stacking the first 3, the second 4, the third 5 and the fourth 6 corrugated sheets upon each other so as to form a corrugated sheets stack 30 and so as to obtain a plurality of substantially hexagonal honeycomb cells 2 by bringing into contact horizontal sides 7 of adjacent corrugated sheets 3,4,5,6. In Figure 2A, the second corrugated sheet 4 is directly staked on the first one 3, the third one 5 is directly staked on the second one 4, and the fourth one 6 is directly stacked on the third one 5. Moreover and in this particular embodiment of the invention, horizontal sides 7 of U-shaped elements 9 of the corrugated sheets 3,4,5,6 are brought into contact with horizontal sides 7 of U-shaped elements 9 of adjacent corrugated sheet 3,4,5,6. Consequently, the horizontal sides 7 of inverted U-shaped elements 9' of the corrugated sheets 3,4,5,6 are brought into contact with horizontal sides 7 of inverted U-shaped elements 9' of adjacent corrugated sheet 3,4,5,6. Actually, the adjacent corrugated sheets 3,4,5,6 are turned over from each other. In Figure 2A, the second corrugated sheet 4 and the fourth one 6 are turned over from the first corrugated sheet 3 or from the third one 5.

Subsequently and advantageously, the method object of the invention comprise the step of stacking subsequent corrugated sheets 20,21 upon the corrugated sheets stack 30 in a similar way as the first 3, second 4, third 5 and fourth 6 corrugated sheets has been stacked upon each other. The number of subsequent corrugated sheets is chosen in function of the desired width w of the composite honeycomb 1. In Figure 2A, two subsequent corrugated sheets 20,21 are stacked upon the corrugated sheets stack 30.

The method object of the invention comprises the step of bonding the horizontal sides 7 of corrugated sheets 3,4,5,6,20,21 brought into contact so as to obtain the composite honeycomb 1. The horizontal sides 7 of corrugated sheets 3,4,5,6,20,21 brought into contact can be bonded either concomitantly as a whole or sequentially in pairs as one of the corrugated sheets 3,4,5,6,20,21 is stacked upon an other one. In order to bond the horizontal sides 7 of corrugated sheets 3,4,5,6,20,21 brought into contact concomitantly as a whole, the corrugated sheets stack 30 is heat-hardened. Alternatively, the horizontal sides 7 of corrugated sheets 3,4,5,6,20,21 brought into contact are bonded sequentially in pairs as one of the corrugated sheets 3,4,5,6,20,21 is stacked upon an other one by gluing the horizontal sides 7 brought into contact. Since horizontal sides of adjacent corrugated sheets are brought into contact, the bonding between adjacent corrugated sheets is reliable. Adjacent corrugated sheets are not likely to be disconnected since the stress and strain applied to the honeycomb are transmitted from one honeycomb cell to the other through sides of adjacent corrugated sheets, not through an end.

Advantageously, the composite honeycomb 1 may be isotropic since it may be formed of a plurality of honeycomb cells 2 each of substantially regular hexagonal cross-section and with all walls of said honeycomb cells of substantially the same thickness, see Figure 2B. By considering that material properties of each cell wall is uniform and by neglecting the non-uniformity in mechanical properties due to the particular geometry of each cell, the uniformity in walls thickness makes the composite honeycomb 1 isotropic, meaning mechanical properties uniform in all directions in the plane of the honeycomb, meaning in the plane perpendicular to the thickness direction of the honeycomb.

Advantageously, parts of the assembled corrugated sheets 3,4,5,6,20,21 can be cut so as to keep the honeycomb cells 2, which walls are of substantially the same thickness.

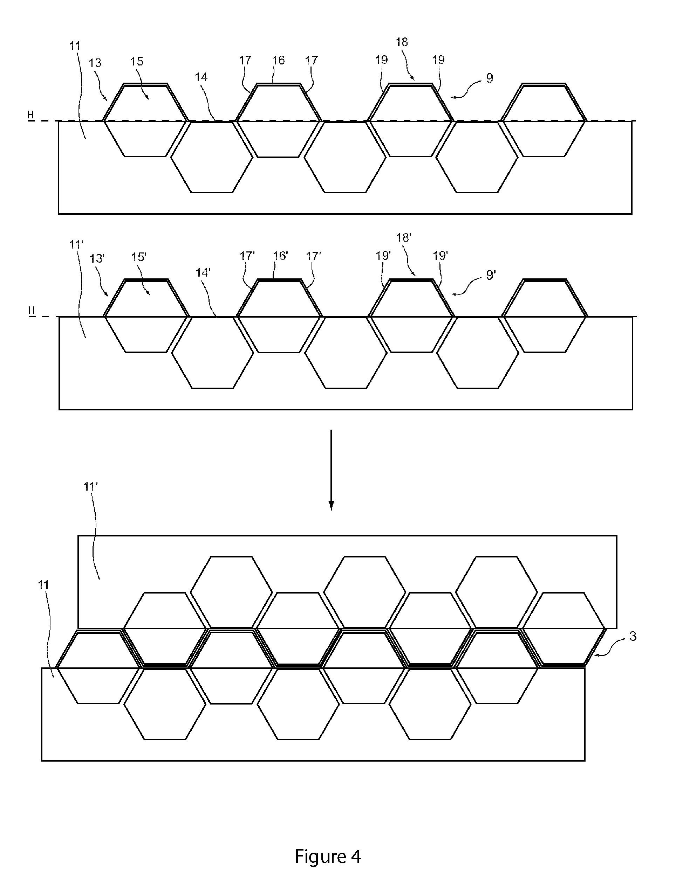

Figure 4 depicts a schematic representation of a method of producing corrugated sheets 3,4,5,6,20,21. The method comprise the step of preparing a pair of mating molds, namely a first mold 11 and a second mold 11', comprising each a molding surface 13,13' provided with flat sides 14,14' arranged in a horizontal plane H and with a plurality of uniformly distributed substantially trapezoid profiles 15,15' projecting with respect to the horizontal plane H. The trapezoid profiles 15,15' comprise each a horizontal base 16,16' projecting with respect to the horizontal plane H and inclined legs 17,17' linking the horizontal base 16 to adjacent flat sides 14,14'. In Figure 4, the molding surface 13 of the first mold 11 is substantially identical to the molding surface 13' of the second mold 11'. Moreover, the trapezoid profiles 15,15' are substantially isosceles, said inclined legs 17,17' being inclined at substantially 120° relative to the horizontal base 16,16' and being of substantially same dimensions as the horizontal bases 16,16'. Moreover, the horizontal bases 16,16' are substantially of same dimensions as the flat sides 14,14'. Isosceles trapezoid profiles 15,15' and horizontal bases 16,16' substantially of same dimensions as the flat sides 14,14' can advantageously lead to the production of a composite honeycomb 1 formed of a plurality of cells 2 each of substantially regular hexagonal cross-section since each corrugated sheet 3,4,5,6,20,21 is shaped in cross-section in a substantially periodic regular trapezoidal waveform defining in cross-section the outline of half of adjacent regular hexagonal honeycomb cells 2 of the composite honeycomb 1.

The method provide the step of forming the U-shaped elements 9 by covering each trapezoid profile 15 of the first mold 11 with a portion of a first fiber-reinforced prepreg ply 18 comprising the structural fibers 40 of the U-shaped elements 9, wherein each portion of first fiber-reinforced prepreg ply 18 covers the horizontal base 16 and the inclined legs 17 of one trapezoid profile 15 of the first mold 11. Similarly, the method provide the step of forming the inverted U-shaped elements 9' by covering each trapezoid profile 15' of the second mold 11' with a portion of a second fiber-reinforced prepreg ply 18' comprising the structural fibers 40 of the inverted U-shaped elements 9', wherein each portion of second fiber-reinforced prepreg ply 18' covers the horizontal base 16' and the inclined legs 17' of one trapezoid profile 15' of the second mold 11'. Once heat-hardened, the portions of first fiber-reinforced prepreg ply 18 and the portions of second fiber-reinforced prepreg ply 18' will become the U-shaped ply 91 and the inverted U-shaped ply 91' respectively. For example, Figure 6 depicts a schematic representation of a first fiber-reinforced prepreg ply 18. The first fiber-reinforced prepreg ply 18 comprises the plurality of structural fibers 40 arranged to lie essentially in a unidirectional orientation of about 45° relative to the thickness direction of the composite honeycomb 1 for bearing stress and strain in said orientation. Referring to Figure 6, one has to note that Figure 6 is a schematic representation of a first fiber-reinforced prepreg ply 18. In reality, a first fiber-reinforced prepreg ply 18 can comprise a number of structural fibers 40 much larger that the one evidenced in Figure 6. The first fiber-reinforced prepreg ply 18 and the second fiber-reinforced prepreg ply 18' comprise each at least one fiber-reinforced ply comprising the structural fibers 40. Advantageously, the first fiber-reinforced prepreg ply 18 and the second fiber-reinforced prepreg ply 18' can comprise a plurality of plies comprising the structural fibers 40.

Subsequently, the method comprise the step of interconnecting a plurality of U-shaped elements 9 with inverted U-shaped elements 9' by assembling the pair of mating molds so that sides 19 of the portions of first fiber-reinforced prepreg ply 18 covering the inclined legs 17 of the trapezoid profiles 15 of the first mold 11 are brought into contact with corresponding sides 19' of the portions of second fiber-reinforced prepreg ply 18' covering the inclined legs 17' of the trapezoid profiles 15' of the second mold 11'. Preferably, the pair of mating mold is assembled by turning over from each other the first mold 11 and the second mold 11'.

Subsequently, the method comprise the step of heat-hardening said portions of first and second fiber-reinforced prepreg plies 18,18' so as to bond said sides 19 of portions of first fiber-reinforced prepreg ply 18 with corresponding sides 19' of portions of second fiber-reinforced prepreg ply 18' and so as to obtain the first corrugated sheet 3. The interconnected U-shaped elements 9 and inverted U-shaped elements 9' are therefore bonded. Such bonding is reliable since the stress and strain applied to the honeycomb and therefore to the corrugated sheet are transmitted from one ply to the other through sides of elements 9,9', not through ends.

Subsequently, the method comprise the step of repeating the previous steps so as to obtain the second 4, third 5 and fourth 6 corrugated sheets as well as eventually the subsequent corrugated sheets 20,21.

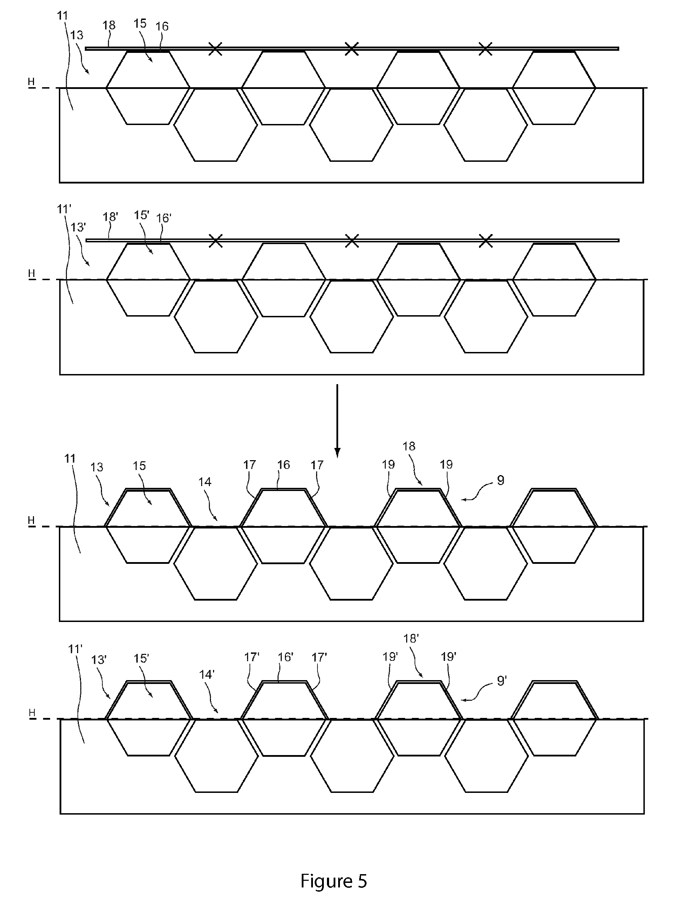

Figure 5 depicts a schematic representation of a method of forming U-shaped elements 9 and inverted U-shaped elements 9' by covering a molding surface with a fiber-reinforced prepreg ply, in accordance with the invention. In particular, the following method allows to cover each isosceles trapezoid profile 15,15' of the first mold 11, respectively second mold 11', with a portion of first fiber-reinforced prepreg ply 18, respectively second fiber-reinforced prepreg ply 18, effectively. The method comprises the step of positioning a first fiber-reinforced prepreg ply 18, respectively second fiber-reinforced prepreg ply 18', upon the molding surface 13,13' of the first mold 11, respectively second mold 11'. Advantageously, the first fiber-reinforced prepreg ply 18, respectively second fiber-reinforced prepreg ply 18', is tightened and maintained above the molding surface 13,13'. Subsequently, the method comprise the step of cutting the first fiber-reinforced prepreg ply 18, respectively second fiber-reinforced prepreg ply 18', so that said portions of first fiber-reinforced prepreg ply 18, respectively second fiber-reinforced prepreg ply 18', are generated. The first fiber-reinforced prepreg ply 18, respectively second fiber-reinforced prepreg ply 18' are cut at every point corresponding to the middle distance between two adjacent isosceles trapezoid profiles 15,15' of the first mold 11, respectively second mold 11'. Because the trapezoid profiles 15,15' are isosceles and because the horizontal bases 16,16' are substantially of same dimensions as the flat sides 14,14', said portions of first fiber-reinforced prepreg ply 18, respectively second fiber-reinforced prepreg ply 18', cover each isosceles trapezoid profile 15,15' of the first mold 11, respectively second mold 11'. Advantageously, the first fiber-reinforced prepreg ply 18, respectively second fiber-reinforced prepreg ply 18', is cut by laser-cutting.

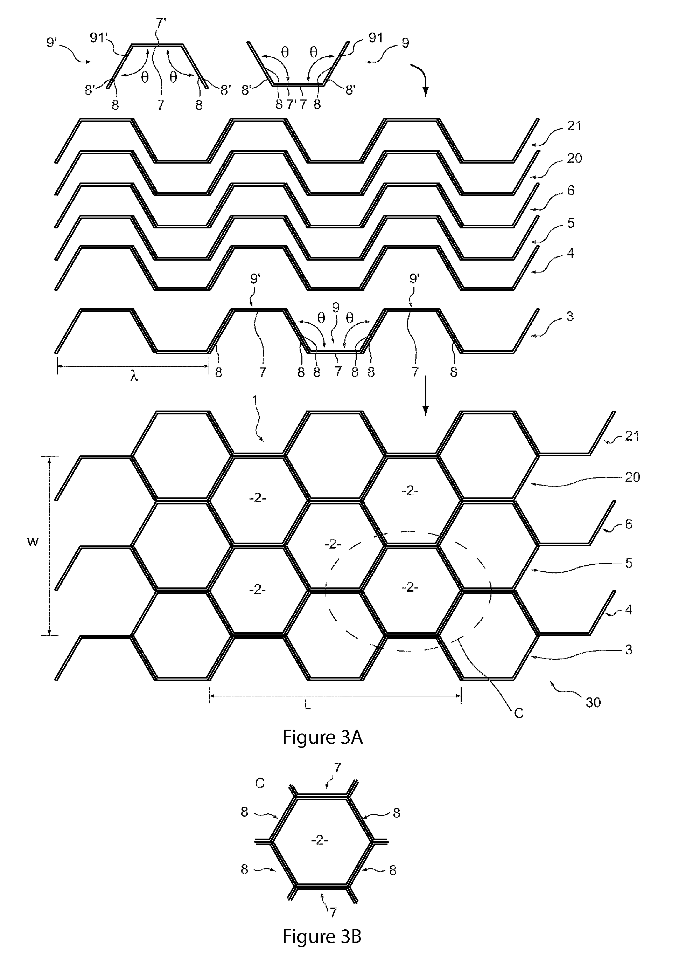

Figure 3A depicts a schematic representation of a method of producing a composite honeycomb 1, in accordance with the invention in a second embodiment. The same steps and elements as in Figure 2A appear in Figure 3A which means that it is not necessary to describe them in detail again. For such steps and elements, one refers to the description of Figure 2A. Similarly, Figure 3B is a detailed view of the composite honeycomb of Figure 3A and the same elements as in Figure 2B appear in Figure 3B which means that it is not necessary to describe them in detail again. In this second embodiment of the invention, horizontal sides 7 of U-shaped elements 9 of the corrugated sheets 3,4,5,6,20,21 are brought into contact with horizontal sides 7 of inverted U-shaped elements 9' of adjacent corrugated sheet 3,4,5,6,20,21. Advantageously, the corrugated sheets 3,4,5,6,20,21 are shaped in a waveform with a determined wavelength λ and the adjacent corrugated sheets 3,4,5,6,20,21 are displaced from each other of substantially one-half of the determined wavelength λ. In Figure 3A, the second corrugated sheet 4, the fourth corrugated sheet 6 and the subsequent corrugated sheet 21 are displaced in a first direction of substantially one-half of the determined wavelength λ from the first corrugated sheet 3 or from the third corrugated sheet 5 or from the subsequent corrugated sheet 20.

In the above methods of producing corrugated sheets 3,4,5,6,20,21 referring to Figure 4 and to Figure 5, the first fiber-reinforced prepreg ply 18 and the second fiber-reinforced prepreg ply 18' comprise at least one fiber-reinforced prepreg ply comprising the structural fibers 40. Advantageously, the first fiber-reinforced prepreg ply 18 and the second fiber-reinforced prepreg ply 18' can comprise at least two plies comprising the structural fibers 40. Moreover, the first fiber-reinforced prepreg ply 18 and the second fiber-reinforced prepreg ply 18' can be identical or different, in particular in terms of structural fibers orientation. One of the advantages of the method object of the invention comes from the fact that the pair of mating mold is assembled by turning over from each other the first mold 11 and the second mold 11'. Consequently and by considering that the first and second fiber-reinforced prepreg plies 18,18' are identical, in particular in terms of structural fibers orientation α, each cells wall of the produced honeycomb 1 comprises a portion of the first fiber-reinforced prepreg ply 18 with structural fibers orientation α and a portion of the second fiber-reinforced prepreg ply 18' with structural fibers orientation -α due to the fact that the second fiber-reinforced prepreg plies 18' has been turned over from the first one 18. Producing a composite honeycomb is therefore less costly, less time consuming and less laborious than known method because it is not necessary to produced two different kinds of plies for producing a composite honeycomb 1 wherein each cell wall comprises two plies comprising opposite structural fibers orientation.

Generally speaking and considering the above descriptions of methods of producing a composite honeycomb 1 with reference to the Figures 2 to 7, the first fiber-reinforced prepreg ply 18 in Figures 6 and 5 may be subjected to become a portions of first fiber-reinforced prepreg ply 18 in Figure 4 which may be subjected to become a U-shaped ply 91 in Figure 7 which may be subjected to be comprised in a U-shaped element 9 in Figures 2 and 3.

As an example, Figure 8 depicts a schematic representation in cross-section of a composite honeycomb 1 produced with the help of the method object of the invention. Advantageously, the composite honeycomb 1 comprises a plurality of contiguous cells 2 each of substantially regular hexagonal cross-section. Each cell 2 comprises a lower part 50 and an upper part 60, said lower part 50 comprising three lower cell walls, namely a lower horizontal cell wall 51 and two lower inclined cell walls 52, and said upper part 60 comprising three upper cell walls, namely an upper horizontal cell wall 61 and two upper inclined cell walls 62. Each of said cell walls 51,52,61,62 are substantially of the same thickness. Moreover, each upper part 60 comprises an inverted U-shaped element 9'. Therefore, each upper part 60 may comprise fiber-reinforced material including a plurality of structural fibers 40 arranged to provide a continuity of fiber-reinforced material between the upper horizontal cell wall 61 and the two upper inclined cell walls 62 of the upper part 60. Similarly, each lower part 50 comprises a U-shaped element 9. Therefore, each lower part 50 may comprise fiber-reinforced material including a plurality of structural fibers 40 arranged to provide a continuity of fiber-reinforced material between the lower horizontal cell wall 51 and the two lower inclined cell walls 52 of the lower part 50. Considering the above-mentioned continuities of fiber-reinforced material, stress and strain applied to the isotropic composite honeycomb 1 can be transmitted from the horizontal cell walls 51,61 to respective inclined cell walls 52,62. Since each cell 2 may comprise the above-mentioned continuity of fiber-reinforced material between horizontal cell walls 51,61 and respective inclined cell walls 52,62, two continuities of fiber-reinforced material may be provided in each corner of cells of the honeycomb. The properties related to the continuity of fiber-reinforced material provide a reliable composite honeycomb with improved mechanical properties, in particular increase of stress and strain resistance.

## Claims

1. A method of producing a composite honeycomb (1) formed of a plurality of honeycomb cells (2) each of substantially hexagonal cross-section and with each wall of said honeycomb cells (2) of substantially the same thickness, comprising the following steps:
a) producing at least four corrugated sheets (3,4,5,6,20,21), namely a first (3), a second (4), a third (5) and a fourth (6) corrugated sheet, by interconnecting a plurality of substantially U-shaped elements (9) with substantially inverted U-shaped elements (9'),
wherein said U-shaped elements (9), respectively said inverted U-shaped elements (9'), comprise each fiber-reinforced material comprising a plurality of structural fibers (40),
wherein said U-shaped elements (9) and said inverted U-shaped elements (9') comprise each a horizontal side (7) and two inclined sides (8),
and wherein each inclined side (8) of each U-shaped element (9) is brought into contact and bonded with one inclined side (8) of one of said inverted U-shaped elements (9'),
b) stacking said first (3), second (4), third (5) and fourth (6) corrugated sheets upon each other so as to form a corrugated sheets stack (30) and so as to obtain a plurality of substantially hexagonal honeycomb cells (2) by bringing into contact horizontal sides (7) of adjacent corrugated sheets (3,4,5,6),
c) stacking subsequent corrugated sheets (20,21) upon said corrugated sheets stack (30) according to the step b) until obtaining a desired width (w) of the composite honeycomb (1),
d) and bonding horizontal sides (7) of corrugated sheets (3,4,5,6,20,21) brought into contact either concomitantly as a whole or sequentially in pairs as one of said corrugated sheets (3,4,5,6,20,21) is stacked upon an other one.

2. The method of producing a composite honeycomb according to the preceding claim, wherein said honeycomb cells (2) are each of substantially regular hexagonal cross-section, wherein said inverted U-shaped elements (9') are substantially symmetrical in shape to said U-shaped elements (9), wherein said horizontal side (7) and said inclined sides (8) of said U-shaped elements (9) are substantially of same dimensions and said inclined sides (8) are inclined at substantially 120° relative to said horizontal side (7).

3. The method of producing a composite honeycomb according to any one of the preceding claim, wherein said U-shaped elements (9), respectively said inverted U-shaped elements (9'), comprise each at least one fiber-reinforced U-shaped ply (91), respectively at least one fiber-reinforced inverted U-shaped ply (91'), comprising each said plurality of structural fibers (40) and wherein said U-shaped plies (91) and said inverted U-shaped plies (91') comprise each a horizontal side (7') and two inclined sides (8').

4. The method of producing a composite honeycomb according to the preceding claims, wherein in step a) said plurality of structural fibers (40) are arranged to provide a continuity of fiber-reinforced material between said horizontal side (7') and said two inclined sides (8') of each U-shaped ply (91), respectively of each inverted U-shaped ply (91'), so that stress and strain applied to the composite honeycomb can be transmitted from said horizontal side (7') to said inclined sides (8').

5. The method of producing a composite honeycomb according to any one of claims 3 or 4 when dependent of claim 2, wherein said inverted U-shaped plies (91') are substantially symmetrical in shape to said U-shaped plies (91).

6. The method of producing a composite honeycomb according to any one of the preceding claims, wherein in step a) said structural fibers (40) are arranged to lie essentially in a unidirectional orientation.

7. The method of producing a composite honeycomb according to any one of claims 3 to 6, wherein in step a) said structural fibers (40) are arranged so that the orientation of the structural fibers (40) of said U-shaped ply (91) differs from the orientation of the structural fibers (40) of said inverted U-shaped ply (91').

8. The method of producing a composite honeycomb according to any one of claims 3 to 7, wherein in step a) said structural fibers (40) are arranged so that the orientation of the structural fibers (40) of said U-shaped ply (91) is substantially perpendicular to the orientation of the structural fibers (40) of said inverted U-shaped ply (91').

9. The method of producing a composite honeycomb according to any one of the preceding claims, wherein in step a) said U-shaped elements (9), respectively said inverted U-shaped elements (9'), comprise each at least two fiber-reinforced U-shaped plies, respectively at least two fiber-reinforced inverted U-shaped plies, namely a first ply and a second ply, comprising said structural fibers (40) and wherein said structural fibers (40) are arranged so that the orientation of the structural fibers (40) of said first ply differs from the orientation of the structural fibers (40) of said second ply.

10. The method of producing a composite honeycomb according to the preceding claim, wherein in step a) said structural fibers (40) are arranged so that the orientation of the structural fibers (40) of said first ply is substantially perpendicular to the orientation of the structural fibers (40) of said second ply.

11. The method of producing a composite honeycomb according to any one of the preceding claims, wherein in step a) said structural fibers (40) are chosen among carbon, glass, aramid, ceramic, quartz, thermoplastic polyethylene (UHMWPE) and polybenzoxazole (PBO).

12. The method of producing a composite honeycomb according to any one of claims 3 to 11, wherein in step a) said structural fibers (40) are chosen and arranged so that the thickness of each U-shaped ply (91), respectively of each inverted U-shaped ply (91'), is comprised between 15 and 100 µm.

13. The method of producing a composite honeycomb according to any one of the preceding claims, wherein in step a) the diameter of said structural fibers (40) are comprised between 5 and 11 µm.

14. The method of producing a composite honeycomb according to any one of claims 3 to 13, wherein in step a) the relative weight of each U-shaped ply (91), respectively or of each inverted U-shaped ply (91'), is as low as 15 g/m².

15. The method of producing a composite honeycomb according to any one of the preceding claims, wherein in step a) producing at least four corrugated sheets (3,4,5,6,20,21) comprises the following steps:
i) preparing a pair of mating molds, namely a first mold (11) and a second mold (11'), comprising each a molding surface (13,13') provided with flat sides (14,14') arranged in a horizontal plane (H) and with a plurality of uniformly distributed substantially trapezoid profiles (15,15') projecting with respect to said horizontal plane (H), said trapezoid profiles (15,15') comprising each a horizontal base (16,16') projecting with respect to said horizontal plane (H) and inclined legs (17,17') linking said horizontal base (16,16') to adjacent flat sides (14,14'),
ii) forming said U-shaped element (9) by covering each trapezoid profile (15) of the first mold (11) with a portion of a first fiber-reinforced prepreg ply (18) comprising said structural fibers (40), wherein each portion of first fiber-reinforced prepreg ply (18) covers the horizontal base (16) and the inclined legs (17) of one trapezoid profile (15) of said first mold (11),
iii) forming said inverted U-shaped element (9) by covering each trapezoid profile (15') of the second mold (11') with a portion of a second fiber-reinforced prepreg ply (18') comprising said structural fibers (40), wherein each portion of second fiber-reinforced prepreg ply (18') covers the horizontal base (16') and the inclined legs (17') of one trapezoid profile (15') of said second mold (11'),
iv) interconnecting a plurality of U-shaped elements (9) with inverted U-shaped elements (9') by assembling said pair of mating molds (11,11') so that sides (19) of said portions of first fiber-reinforced prepreg ply (18) covering the inclined legs (17) of the trapezoid profiles (15) of the first mold (11) are brought into contact with corresponding sides (19') of said portions of second fiber-reinforced prepreg ply (18') covering the inclined legs (17') of the trapezoid profiles (15') of the second mold (11'),
v) heat-hardening said portions of first and second fiber-reinforced prepreg plies (18,18') so as to bond said sides (19) of portions of first fiber-reinforced prepreg ply (18) with corresponding sides (19') of portions of second fiber-reinforced prepreg ply (18') and so as to obtain said first corrugated sheet (3),
vi) repeating the steps i) to v) so as to obtain said second (4), third (5) and fourth (6) corrugated sheets as well as eventually said subsequent corrugated sheets (20,21).

16. The method of producing a composite honeycomb according to the preceding claim, wherein the molding surface (13) of the first mold (11) is substantially identical to the molding surface (13') of the second mold (11'), wherein said trapezoid profiles (15,15') are substantially isosceles, said inclined legs (17,17') being inclined at substantially 120° relative to said horizontal base (16,16') and being of substantially same dimensions as said horizontal base (16,16'), wherein said flat sides (14,14') are substantially of same dimensions and wherein said horizontal base (16,16') are substantially of same dimensions as said flat sides (14,14').

17. The method of producing a composite honeycomb according to any one of claims 15 to 16, wherein in step iv) said pair of mating mold is assembled by turning over from each other the first mold 11 and the second mold 11'.

18. The method of producing a composite honeycomb according to any one of claims 16 to 17, wherein in step ii), respectively iii), covering each isosceles trapezoid profile (15,15') of the first mold (11), respectively second mold (11'), with a portion of first fiber-reinforced prepreg ply (18), respectively second fiber-reinforced prepreg ply (18'), comprises the following steps:
- positioning a first fiber-reinforced prepreg ply (18), respectively second fiber-reinforced prepreg ply (18'), upon the molding surface (13,13') of the first mold (11), respectively second mold (11'),
- cutting said first fiber-reinforced prepreg ply (18), respectively second prepreg ply (18'), at every point corresponding to the middle distance between two adjacent isosceles trapezoid profiles (15,15') of the first mold (11), respectively second mold (11'), so that said portions of first fiber-reinforced prepreg ply (18), respectively second fiber-reinforced prepreg ply (18'), are generated and so that said portions of first fiber-reinforced prepreg ply (18), respectively second fiber-reinforced prepreg ply (18'), cover each isosceles trapezoid profile (15,15') of the first mold (11), respectively second mold (11').

19. The method of producing a composite honeycomb according to the preceding claim, wherein said first fiber-reinforced prepreg ply (18), respectively second fiber-reinforced prepreg ply (18'), is cut by laser-cutting.

20. The method of producing a composite honeycomb according to any one of the preceding claims, wherein in step b) horizontal sides (7) of U-shaped elements (9) of the corrugated sheets (3,4,5,6) are brought into contact with horizontal sides (7) of U-shaped elements (9) of adjacent corrugated sheet (3,4,5,6) by turning over from each other adjacent corrugated sheets (3,4,5,6).

21. The method of producing a composite honeycomb according to any one of the preceding claims, wherein in step b) horizontal sides (7) of U-shaped elements (9) of the corrugated sheets (3,4,5,6) are brought into contact with horizontal sides (7) of inverted U-shaped elements (9') of adjacent corrugated sheet (3,4,5,6) by displacing from each other adjacent corrugated sheets (3,4,5,6).

22. The method of producing a composite honeycomb according to any one of the preceding claims, wherein in step d) said horizontal sides (7) of corrugated sheets (3,4,5,6,20,21) brought into contact are bonded concomitantly as a whole by heat-hardening said corrugated sheets stack (30).

23. The method of producing a composite honeycomb according to any one of the preceding claims, wherein in step d) said horizontal sides (7) of corrugated sheets (3,4,5,6,20,21) brought into contact are bonded sequentially in pairs as one of said corrugated sheets (3,4,5,6,20,21) is stacked upon an other one by gluing said horizontal sides (7) brought into contact.
